# EUROPEAN PATENT APPLICATION

(11) **EP 4 310 014 A1**
(43) Date of publication of application: **24.01.2024**
(21) Application number: 21931667.6
(22) Date of filing: 14.09.2021
(51) Int. Cl.: B65D 5/28, B31B 50/74

(54) **ASSEMBLED PAPER CONTAINER, METHOD FOR MANUFACTURING ASSEMBLED PAPER CONTAINER, AND DEVICE FOR MANUFACTURING ASSEMBLED PAPER CONTAINER**

(30) Priority: 19.03.2021 JP 2021046363
(71) Applicant: Tokan Kogyo Co., Ltd., Tokyo 141-0022 (JP)
(72) Inventor: YAMAGUCHI Masaru, Tokyo 141-0022 (JP); NARITA Kodai, Tokyo 141-0022 (JP)
(74) Representative: Rings, Rolf
(86) International application number: PCT/JP2021/033662
(87) International publication number: WO 2022/195923

(57) **Abstract**

[Problem]

Provided is an assembled paper container capable of suppressing leakage of contained matter or seepage of contained matter from a container section of a container main body.

[Solution]

An assembled paper container 1 includes a container main body 11 including a container section 12, and a resin film 3 covered over an inner surface of the container main body 11. The container main body 11 includes a bottom surface 121, a plurality of side surfaces 122, and a flange section 13. The flange section 13 has a top surface 131 provided with a step 22 extending outward from the container section 12 side, and the step 22 is generated by bonding fold-back pieces 13a, 13b together so as to be mutually overlapped after the assembly. The resin film 3 has a protruding section 31 traversing the step 22 above the step 22 in a part covered with the top surface 131 of the flange section 13 of the container main body 11.

## Description

### TECHNICAL FIELD

The present invention relates to an assembled paper container, a method for manufacturing the assembled paper container, and a manufacturing apparatus of the assembled paper container.

### BACKGROUND ART

Conventionally, there has been known an assembled paper container in which a tray shaped container main body including a flange section in an upper end is assembled from a blank sheet using paper as a main raw material. In the assembled paper container, a thermoplastic resin film having resin property is sometimes attached to an inner surface of the container main body including a top surface of the flange section (see Patent Documents 1, 2, and the like). The assembled paper container with the resin film has resin property, and thus is mainly used as a tray or a bowl for containing food products and the like.

Compared with a plastic container, the assembled paper container is a product that can, for example, suppress generation of secondary microplastic occurred in the environment, and be environmentally considerate. Furthermore, the resin film can be stripped off from the container main body, thereby allowing the resin film to be separated from the paper container main body, and thus the resin film and the container main body can be recycled individually. Given these advantages, the assembled paper container is expected to be used as a packaging container for food products and the like or a storage container for food products and the like by applying, for example, Modified Atmosphere Packaging (MAP).

Patent Document 1: JP-A-H06-293334
Patent Document 2: JP-A-2019-172339

### DISCLOSURE OF THE INVENTION

### PROBLEMS TO BE SOLVED BY THE INVENTION

In the container main body of the conventional assembled paper container, due to its shape, gaps caused by end surfaces of the blank sheet approaching one another occurs on the top surface of the flange section. Currently, even by covering the inner surface of the container main body including the top surface of the flange section with the resin film, these gaps are difficult to be closed completely. The resin film is thin, and in a case where the resin film is covered over the inner surface of the container main body including the top surface of the flange section by, for example, vacuum pressure, the resin film gets suctioned into the gaps. Therefore, the gaps are difficult to be closed by the resin film alone.

A packaging method of packaging by replacing air inside a container section of the container main body with a food packaging gas that is appropriate for food products is being developed (such as MAP). In a case where such packaging method is applied to the assembled paper container with the resin film, a top seal becomes attached to the resin film on the top surface of the flange section. However, since the top seal is also thin, even by attaching the top seal to the resin film, a cavity along the gap occurs between the top surface of the resin film and a lower surface of the top seal. That is, even with the top seal, the cavity is difficult to be closed completely. Moreover, both ends of the cavity are opened. Therefore, the container section of the container main body is communicated with an outside of the container main body via the cavity.

Based on the above, in the assembled paper container with the resin film, even by covering the container section with the top seal, leakage of contained matter or seepage of contained matter from the container section may possibly occur via the cavity.

Therefore, the present invention is made in consideration of the above-described problems, and it is an object of the present invention to provide an assembled paper container capable of suppressing leakage of contained matter or seepage of contained matter from a container section of a container main body, a method for manufacturing the assembled paper container, and a manufacturing apparatus of the assembled paper container.

### SOLUTIONS TO THE PROBLEMS

An assembled paper container according to a first invention is an assembled paper container including a container main body and a resin film. The container main body is assembled from a blank sheet using paper as a main material. The container main body includes a container section. The resin film is covered over an inner surface of the container main body. The container main body includes a bottom surface, a plurality of side surfaces standing upright from the bottom surface, and a flange section continuous with upper end portions of the plurality of side surfaces and provided to extend toward an outside of the container section after the assembly. The flange section has a top surface provided with a step extending outward from the container section side, and the step is generated by bonding fold-back pieces of the blank sheet together so as to be mutually overlapped after the assembly. The resin film has a protruding section traversing the step above the step in a part covered with the top surface of the flange section of the container main body.

In the assembled paper container according to a second invention, which is in the first invention, the container main body is assembled from one blank sheet.

In the assembled paper container according to a third invention, which is in the first invention or the second invention, the protruding section of the resin film has a cross-sectional shape with at least one corner portion or arc portion traversing the step above the step.

The assembled paper container according to a fourth invention, which is in any of the first invention to the third invention, further includes a top seal attached to the resin film covered over the top surface of the flange section and covering the container section. The top seal traverses the step while squashing the protruding section, and is attached to the resin film above the top surface of the flange section.

In the assembled paper container according to a fifth invention, which is in the fourth invention, the resin film is formed such that the protruding section is squashed by the top seal and the resin film including a peripheral portion of the protruding section is folded in three or more layers.

A method for manufacturing an assembled paper container according to a sixth invention is a method for manufacturing an assembled paper container that includes a container main body and a resin film. The container main body is assembled from a blank sheet using paper as a main material. The container main body includes a container section. The resin film is covered over an inner surface of the container main body. The method including: a case assembling step of assembling the container main body by standing a plurality of side surfaces from a bottom surface of the blank sheet to form the container section of the container main body, and folding back upper portions of the plurality of side surfaces and bonding fold-back pieces of the blank sheet together so as to be mutually overlapped to form a flange section provided to extend toward an outside of the container section, the flange section having a top surface provided with a step extending outward from the container section; and a protruding section forming and resin film covering step of covering the inner surface of the container main body with the resin film by locating the resin film over the inner surface of the container main body assembled in the case assembling step, suctioning a surface of the resin film in a protruding section forming region traversing the step to provide the protruding section traversing the step to the resin film above the step, and extracting air between the container main body and the resin film from a gap between peripheries thereof.

In the method for manufacturing an assembled paper container according to a seventh invention, which is in the sixth invention, in the protruding section forming and resin film covering step, a suction start timing of suctioning the surface of the resin film in the protruding section forming region traversing the step is set earlier than an extraction start timing of extracting the air between the container main body and the resin film.

The method for manufacturing an assembled paper container according to an eighth invention, which is in the sixth invention or the seventh invention, further includes, after the protruding section forming and resin film covering step, a top seal attaching step of attaching a top seal to the resin film covered over the top surface of the flange section so as to traverse the step while squashing the protruding section above the top surface of the flange section.

A manufacturing apparatus of an assembled paper container according to a ninth invention is a manufacturing apparatus of an assembled paper container that includes a container main body and a resin film. The container main body is assembled from a blank sheet using paper as a main material. The container main body includes a container section. The resin film is covered over an inner surface of the container main body. The manufacturing apparatus includes a lower mold on which the container main body is placed, a suction covering section provided in the lower mold and suctioning air between the resin film and the suction covering section to cover the inner surface of the container main body with the resin film, an upper mold opposed to the lower mold and having the resin film interposed between the lower mold and the upper mold, a flange pressing section housed in the upper mold and pressing the flange section of the container main body and the resin film on the flange section, and a molding section provided to the flange pressing section. The molding section suctions a protruding section forming region of the resin film on the flange section to mold the protruding section traversing a step at the resin film. The step is generated by bonding fold-back pieces of the blank sheet together so as to be mutually overlapped, and extending outward from the container section side.

In the manufacturing apparatus of an assembled paper container according to a tenth invention, which is in the ninth invention, in the protruding section forming region of the resin film, a suction direction of the molding section is opposite to a suction direction of the suction covering section, and a suction force of the molding section is set to be larger than a suction force of the suction covering section.

In the manufacturing apparatus of an assembled paper container according to an eleventh invention, which is in the ninth invention or the tenth invention, a suction start timing of the molding section is set to be earlier than a suction start timing of the suction covering section.

### EFFECTS OF THE INVENTION

The present invention with the above-described configurations can provide the assembled paper container capable of suppressing leakage of contained matter or seepage of contained matter from the container section of the container main body.

### BRIEF DESCRIPTION OF THE DRAWINGS

Fig. 1(a) is a plan view illustrating an assembled paper container according to an embodiment of the present invention, Fig. 1(b) is a side view illustrating the assembled paper container of Fig. 1(a), and Fig. 1(c) is a perspective view illustrating the assembled paper container of Fig. 1(a).
Fig. 2 is a developed view illustrating a blank sheet used for the assembled paper container of Fig. 1.
Fig. 3 is an enlarged cross-sectional view of a part along a line A-A viewed from an arrow direction of Fig. 1, and a schematic cross-sectional view illustrating an example of a protruding section.
Fig. 4 is a plan view illustrating an aspect in which a container section of the assembled paper container of Fig. 1 is covered with a top seal.
Fig. 5(a) is a cross-sectional view of a periphery of the theoretically assumed squashed protruding section in the assembled paper container of Fig. 4, and Fig. 5(b) is a cross-sectional view of a periphery of the actually squashed protruding section.
Fig. 6 is a flowchart illustrating a process in a method for manufacturing the assembled paper container according to the embodiment of the present invention.
Fig. 7(a) and Fig. 7(b) are schematic cross-sectional views illustrating an example of a manufacturing apparatus of the assembled paper container according to the embodiment of the present invention.
Fig. 8(a) and Fig. 8(b) are schematic cross-sectional views illustrating states of forming the protruding section.
Fig. 9 is a schematic block diagram illustrating an example of a manufacturing system of the assembled paper container according to the embodiment of the present invention.
Fig. 10(a) is a plan view illustrating an assembled paper container according to an embodiment of a prior invention, Fig. 10(b) is a side view illustrating the assembled paper container of Fig. 10(a), and Fig. 10(c) is a perspective view illustrating the assembled paper container of Fig. 10(a).
Fig. 11 is a table of comparison result in an experimental validation between the assembled paper container according to the present invention and the assembled paper container according to the prior invention.

### DESCRIPTION OF PREFERRED EMBODIMENTS

The following describes an embodiment exemplified by applying the present invention by referring to the drawings.

### [Embodiment]

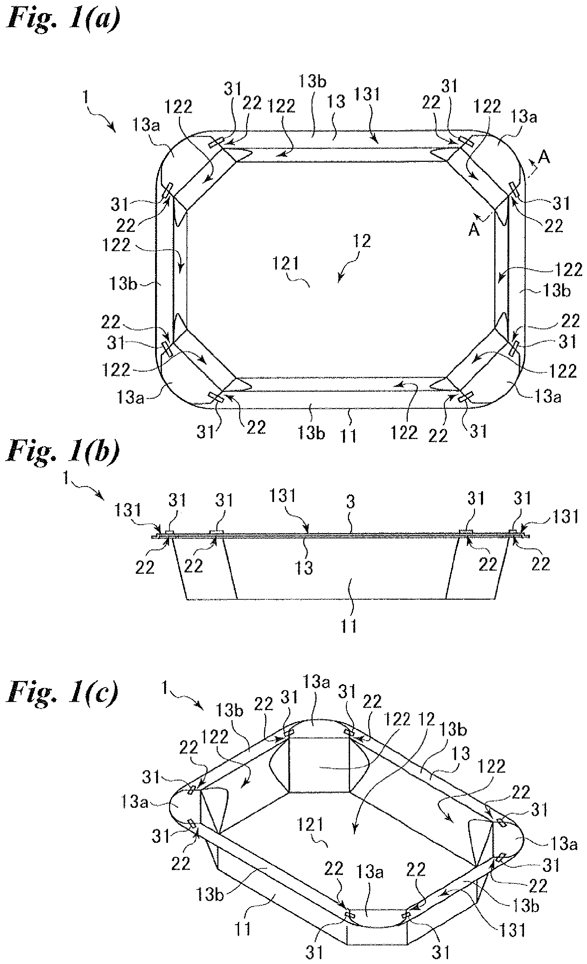

An assembled paper container 1 according to the embodiment of the present invention includes, as illustrated in Fig. 1(a) to Fig. 1(c), a container main body 11 and a resin film 3 covered over an inner surface of the container main body 11.

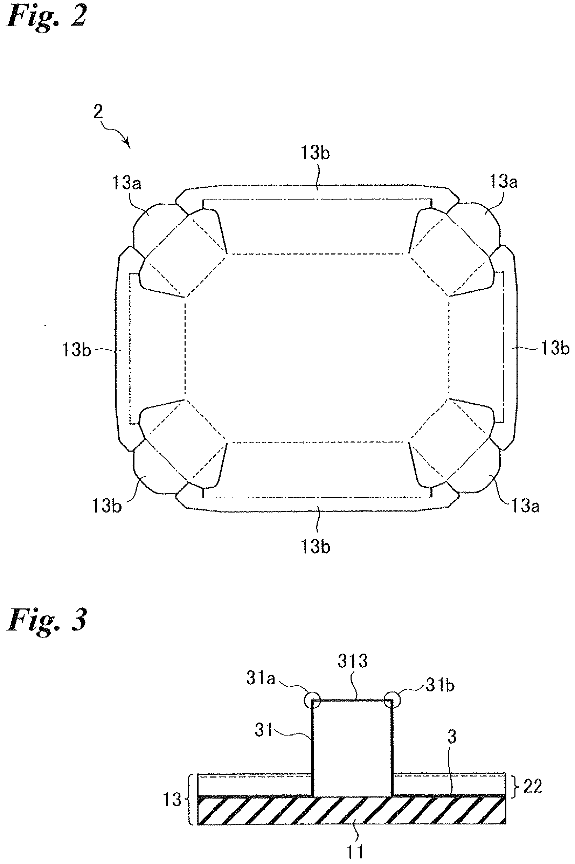

The container main body 11 includes a container section 12 and a flange section 13. Then, the container main body 11 is assembled from one blank sheet 2 using paper as a main material illustrated in Fig. 2. In Fig. 2, the dotted lines indicate "valley folds," and the one dot chain lines indicate "mountain folds." The trough fold lines and the mountain fold lines are indicated by, for example, perforations, half cuttings, and ruled lines. Furthermore, the solid lines in the blank sheet 2 indicate "notches." By performing "trough folds" and "mountain folds" on the blank sheet 2, and bonding fold-back pieces 13a, 13b together so as to be mutually overlapped, the container main body 11 is configured.

In this embodiment, the container section 12 has eight side surfaces 122 standing upright from a bottom surface 121. The container section 12 can be configured with three or more side surfaces 122.

The flange section 13 is continuous with upper end portions of the respective side surfaces 122, and provided to extend toward the outside of the container section 12. A top surface 131 of the flange section 13 is provided with two steps 22 at each of four corners, and the step 22 is formed by bonding the fold-back pieces 13a, 13b of the blank sheet 2 together so as to be mutually overlapped after the assembly and extends outward from the container section 12 side.

The resin film 3 is covered over the inner surface of the container main body 11 including the top surface 131 of the flange section 13. The resin film 3 includes a protruding section 31 traversing the step 22 above the step 22 at a part covered with the top surface 131 of the flange section 13 of the container main body 11. In this embodiment, the assembled paper container 1 includes the eight steps 22, and the protruding section 31 is formed for each of the steps 22. A plurality of the protruding sections 31 may be provided for one step 22.

As illustrated in an example of Fig. 3, the protruding section 31 has a quadrangular cross-sectional shape with two corner portions, a first corner portion 31a and a second corner portion 3 1b, at both left and right ends of a top surface 313 above the step 22. The cross-sectional shape of the protruding section 31 is not limited to such a quadrangular shape, and any shape, such as a triangular shape and a semicircular shape, may be employed.

Examples of the resin appropriate for covering the inner surface of the container main body 11 and used for the resin film 3 allowing the formation of the protruding section 31 include thermoplastic resins, for example, polyolefin, such as polyethylene (PE) and polypropylene (PP), polyester, such as polyvinyl chloride and polyethylene terephthalate (PET), ethylene-vinyl acetate copolymer (EVA), ethylene-acrylic acid copolymer, polyamide, polyvinylidene chloride, polystyrene, polycarbonate, polybutene, and polyvinyl alcohol. The resin film 3 may be a single film made of any above-described material, or a film made by mixing a plurality of the above-described materials. Furthermore, the resin film 3 may be a single layer film or a laminated film laminating a plurality of layers.

Next, from the above-described aspect, the assembled paper container 1 in an aspect in which the container section 12 is covered with a top seal 4 will be described.

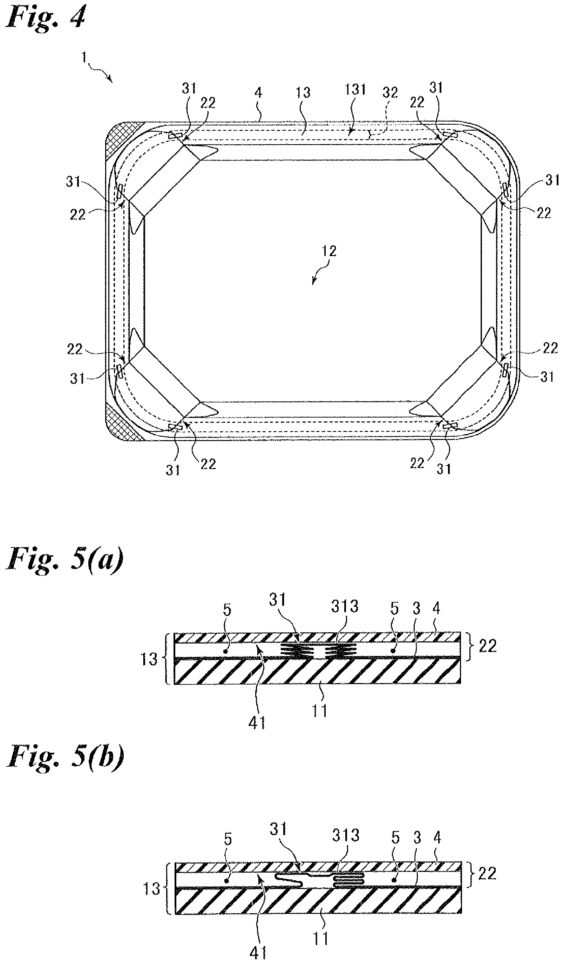

As illustrated in Fig. 4, the assembled paper container 1 can pack and contain a content, such as a food product, by covering the container section 12 with the top seal 4. The top seal 4 is attached to the resin film 3 on the top surface 131 of the flange section 13. This causes the top seal 4 to cover the container section 12. In this embodiment, the top seal 4 traverses the step 22 and is attached to the resin film 3 while squashing the protruding section 31 above the top surface 131 of the flange section 13. When the top seal 4 is attached to the resin film 3, the top seal 4 is pressed while being heated by a pressing machine in a pressing region 32 indicated by dotted lines. In this embodiment, the protruding section 31 is designed such that the whole protruding section 31 is fitted in a width of the pressing region 32. Thus, the protruding section 31 can be surely squashed by the pressing machine.

Here, while it is assumed in theory that the cross-sectional surface in a periphery of the protruding section 31 is in a state as illustrated in Fig. 5(a), the cross-sectional surface is in a state as illustrated in Fig. 5(b) in an actual confirmation.

However, even in the state as illustrated in Fig. 5 (b), a lower surface 41 of the top seal 4 can be sufficiently thermocompression-bonded to the top surface of the resin film 3 above the step 22, and it has been confirmed that the top seal 4 can be attached to the top surface of the resin film 3 so as to close a cavity 5 generated by the step 22.

Additionally, it has been also confirmed that the resin film 3 folded in a plurality of three or more layers due to the squashed protruding section 31 provides a reactive force against the top seal 4 during the pressing, and the lower surface 41 of the top seal 4 can be easily thermocompression-bonded to the top surface of the resin film 3.

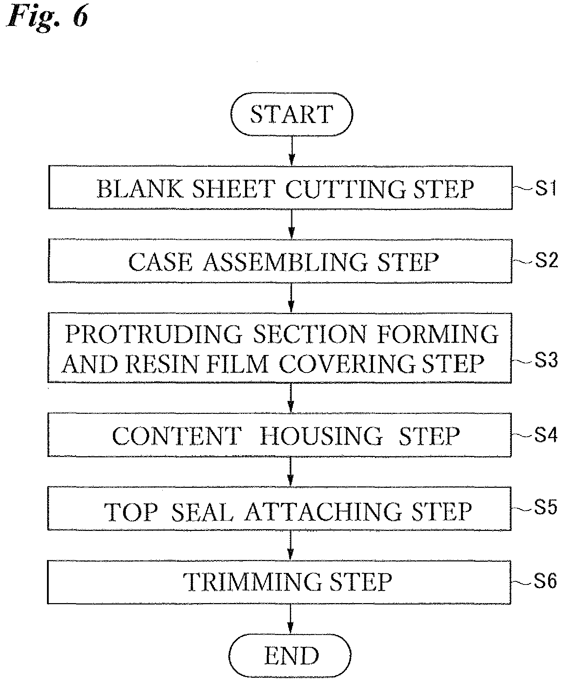

Next, with reference to Fig. 6, a method for manufacturing the assembled paper container 1 according to the embodiment of the present invention will be described.

First, in the method for manufacturing the assembled paper container 1 according to the embodiment of the present invention, a blank sheet cutting step S1 of cutting to form the above-described blank sheet 2 is performed, thus fabricating the blank sheet 2.

Subsequently, a case assembling step S2 of assembling the container main body 11 from the blank sheet 2 fabricated by cutting out in the blank sheet cutting step S1 is performed.

Subsequently, a protruding section forming and resin film covering step S3 is performed. In the protruding section forming and resin film covering step S3, the resin film 3 is located over the inner surface of the container main body 11 assembled in the case assembling step S2, a surface of the resin film 3 in a protruding section forming region traversing the step 22 is suctioned to form the protruding section 31 traversing the step 22 above the step 22 of the resin film 3, and a pressure is applied from the upper side of the resin film 3 while extracting air between the container main body 11 and the resin film 3 from a gap between peripheries thereof by, for example, vacuum pressure, thereby covering the inner surface of the container main body 11 with the resin film 3. While the vacuum pressure is described as an example of the method of covering the container main body 11 with the resin film 3, the air between the container main body 11 and the resin film 3 may be extracted by only suctioning the air between the container main body 11 and the resin film 3 from the gap therebetween, or by only applying a pressure from the upper side of the resin film 3.

In this respect, in the protruding section forming and resin film covering step S3, a suction start timing of suctioning the surface of the resin film 3 in the protruding section forming region traversing the step 22 is set earlier than an extraction start timing of extracting the air between the container main body 11 and the resin film 3.

Subsequently, a content housing step S4 is performed. In the content housing step S4, a content, such as a food product, is housed in the container section 12 of the assembled paper container 1 fabricated in the protruding section forming and resin film covering step S3 in the state where the top seal 4 has not been attached.

Subsequently, a top seal attaching step S5 is performed. In the top seal attaching step S5, the top seal 4 is attached to the resin film 3 covered over the top surface of the flange section 13 of the assembled paper container 1 in the state where the content, such as a food product, is housed in the container section 12 in the content housing step S4 so as to traverse the steps 22 while squashing the protruding sections 31 above the top surface of the flange section 13 using a pressing machine.

Finally, a trimming step S6 of performing trimming to remove the excess resin film 3 around the assembled paper container 1 is performed, thereby fabricating the assembled paper container 1 and completing the method for manufacturing the assembled paper container 1 according to this embodiment.

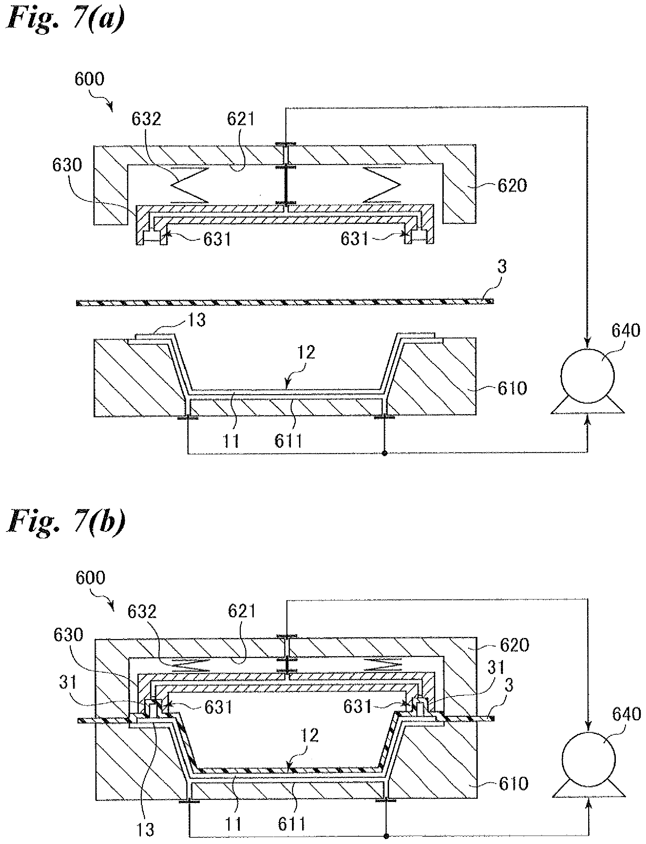

Next, with reference to Fig. 7, a manufacturing apparatus 600 of the assembled paper container 1 according to the embodiment of the present invention will be described.

The manufacturing apparatus 600 of the assembled paper container 1 according to the embodiment of the present invention is, as illustrated in Fig. 7 (a) and Fig. 7 (b), a novel manufacturing apparatus capable of manufacturing the assembled paper container 1 according to the embodiment. The manufacturing apparatus 600 is configured to cover the container main body 11 having the flange section 13 with the resin film 3, and configured to form the protruding section 31 at the resin film 3 during the covering.

The manufacturing apparatus 600 includes a lower mold 610, a suction covering section 611, an upper mold 620, a flange pressing section 630, and a molding section 631.

The container main body 11 is placed on the lower mold 610.

The suction covering section 611 is provided in the lower mold 610, and connected to a vacuum pump 640. The suction covering section 611 is configured to suction the resin film 3 via the container main body 11 placed on the lower mold 610 to extract the air from the gap with the periphery of the container main body 11.

The upper mold 620 is opposed to the lower mold 610, and vertically movable. The resin film 3 is sandwiched between the lower mold 610 and the upper mold 620. When the upper mold 620 is brought in close contact with the lower mold 610 having the resin film 3 sandwiched between the upper mold 620 and the lower mold 610, a processing space in an approximately sealed state is formed. Inside the processing space, the resin film 3 is covered over the container section 12 and the flange section 13 by, for example, vacuum pressure.

The flange pressing section 630 is housed in the upper mold 620. The flange pressing section 630 is supported to a top panel portion 621 of the upper mold 620 by an extendable elastic member 632, such as a spring. The flange pressing section 630 presses the flange section 13 and the resin film 3 on the flange section 13, for example, during the vacuum pressure.

The molding section 631 is provided to the flange pressing section 630, and connected to the vacuum pump 640. The molding section 631 suctions a protruding section forming region of the resin film 3 on the flange section 13. The protruding section forming region is set to traverse the step 22. The protruding section 31 is formed, for example, while the resin film 3 is being covered over the inner surface of the container main body 11. A suction direction of the molding section 631 is opposite to a suction direction of the adhesive section 611. In this embodiment, the suction covering section 611 suctions the resin film 3 in a direction heading toward the container main body 11. The molding section 631 suctions the resin film 3 in a direction moving away from the container main body 11.

Here, the state of forming the protruding section 31 will be described.

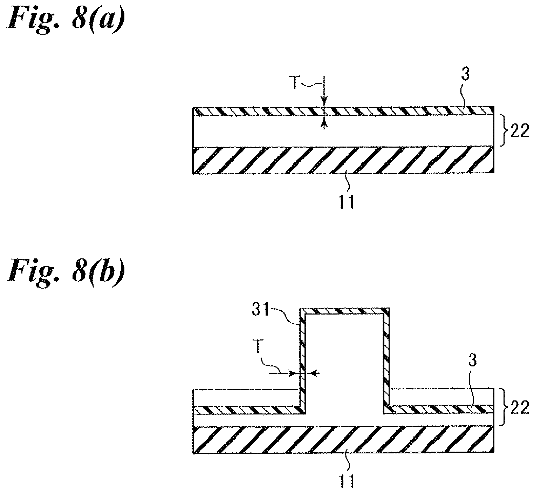

As illustrated in Fig. 8(a) and Fig. 8(b), by molding the protruding section 31 through suction, a thickness T of the resin film 3 changes before and after the suction. For example, after the suction, the thickness T of the resin film 3 of the protruding section 31 becomes thinner. When the thickness T of the resin film 3 of the protruding section 31 becomes thinner, the protruding section 31 becomes easier to fold or squash, compared with a case where the thickness T is thicker. This is one of the advantages of molding the protruding section 31 by suctioning the resin film 3.

Here, the exemplary operation of the manufacturing apparatus 600 will be described.

As illustrated in Fig. 7(a) and Fig. 7(b), the heated resin film 3 is led between the upper mold 620 and the lower mold 610 in a state where the upper mold 620 is separated from the lower mold 610.

Subsequently, the container main body 11 is placed on the lower mold 610.

Subsequently, the upper mold 620 is moved down to press the resin film 3 with the upper mold 620. Furthermore, the flange section 13 and the resin film 3 on the flange section 13 are pressed by the flange pressing section 630.

Subsequently, the resin film 3 is suctioned by each of the suction covering section 611 and the molding section 631. Accordingly, the resin film 3 is covered over each of the bottom surface 121 of the container section 12, the side surfaces 122 of the container section 12, and the top surface 131 of the flange section 13. Furthermore, the protruding section 31 that becomes a protrusion with respect to the flange section 13 is molded above the step 22 on the flange section 13.

A suction start timing of the molding section 631 may be set to be earlier than a suction start timing of the suction covering section 611. By shifting the suction start timings as such, the protruding section 31 can be molded before the resin film 3 is covered over the top surface 131 of the flange section 13. Thus, advantageously, the protruding section 31 becomes easier to mold.

Additionally, the suction direction of the molding section 631 may be set to be opposite to a suction direction of the suction covering section 611, and a suction force of the molding section 631 may be set to be larger than a suction force of the suction covering section 611. With such a difference in magnitude of the suction force, the protruding section forming region is easily suctioned outward, and therefore, advantageously, the protruding section 31 becomes easier to mold.

Then, the upper mold 620 is moved up, and the assembled paper container 1 is removed from the manufacturing apparatus 600.

Finally, by performing a trimming for removing the excess resin film 3 around the assembled paper container 1, the assembled paper container 1 is completed.

Accordingly, the manufacturing apparatus 600 of the assembled paper container 1 according to the embodiment can manufacture the assembled paper container 1.

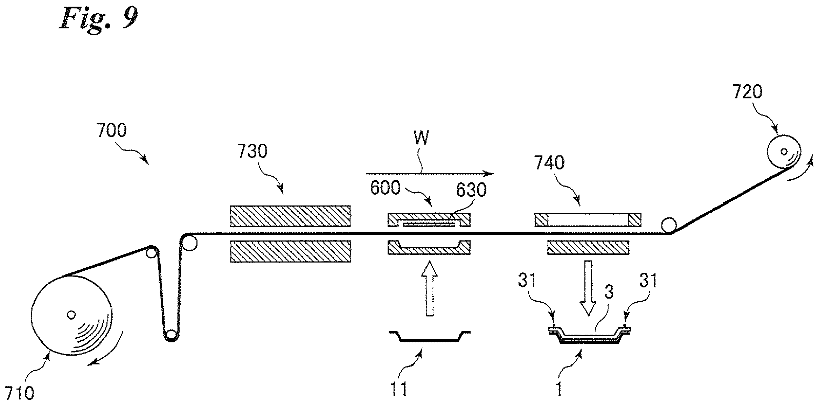

Next, with reference to Fig. 9, a manufacturing system 700 of the assembled paper container 1 according to the embodiment of the present invention will be described.

The manufacturing system 700 of the assembled paper container 1 according to the embodiment of the present invention covers the container main body 11 having the flange section 13 with the resin film 3 while winding the resin film 3 wound around a supplying roller 710 using a winding roller 720.

As illustrated in Fig. 9, the manufacturing system 700 includes the supplying roller 710, the winding roller 720, a heating machine 730, the manufacturing apparatus 600, and a trimming machine 740.

One roll of the strip-shaped resin film 3 is mounted to the supplying roller 710.

One end of the strip-shaped resin film 3 is mounted to the winding roller 720, and the winding roller 720 winds the strip-shaped resin film 3. The strip-shaped resin film 3 moves along a feed direction W from the supplying roller 710 toward the winding roller 720.

The heating machine 730 is arranged between the supplying roller 710 and the winding roller 720, and heats the strip-shaped resin film 3.

The manufacturing apparatus 600 is as described above, and arranged between the heating machine 730 and the winding roller 720.

The trimming machine 740 is arranged between the manufacturing apparatus 600 and the winding roller 720, and trims the assembled paper container 1 manufactured by the manufacturing apparatus 600. Accordingly, the assembled paper container 1 is separated from the strip-shaped resin film 3.

Thus, the manufacturing system 700 of the assembled paper container 1 according to the embodiment includes the manufacturing apparatus 600. Accordingly, the manufacturing system 700 can manufacture the assembled paper container 1. Moreover, the manufacturing system 700 can successively manufacture the assembled paper container 1 from the strip-shaped resin film 3.

According to the above-described embodiment of the present invention, the top seal 4 can be thermocompression-bonded to the top surface of the resin film 3 above the step 22, and the top seal 4 can be covered over the top surface of the resin film 3 above the step 22 so as to close the cavity 5 generated by the step 22.

Additionally, as a result of squashing the protruding section 31, the sidewall of the protruding section 31 of the resin film 3 is folded in a plurality of layers, and the top seal 4 is easily thermocompression-bonded to the top surface of the resin film 3 also above the step 22.

Thus, the embodiment can provide the assembled paper container 1 capable of suppressing leakage of contained matter or seepage of contained matter from the container section 12 of the container main body 11 by the resin film 3 and the top seal 4.

### [Working Example]

The following describes results of experimental validation conducted to confirm the effects of the invention.

In the experimental validation, for the assembled paper container 1 according to the present invention and an assembled paper container 100 according to a prior invention by this applicant (Japanese Patent Application No. 2019-235300), an inspection for confirming the leakage of the contained matter inside was performed with the top seal 4 attached to both assembled paper containers under a plurality of changed conditions, and the results were compared.

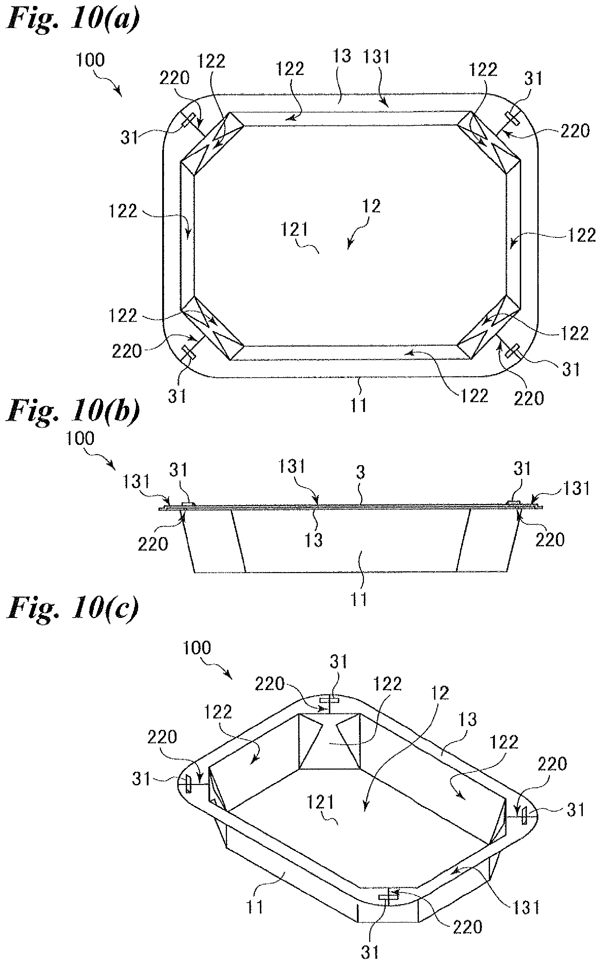

Here, the assembled paper container 100 according to the prior invention is an assembled paper container, as illustrated in Fig. 10(a) to Fig. 10(c), assembled from a blank sheet using paper as a main material, and includes a container main body 11 with a container section 12 and a resin film 3 covered over an inner surface of the container section 12. The container main body 11 includes a bottom surface 121, a plurality of side surfaces 122 standing upright from the bottom surface 121, and a flange section 13 connected to the plurality of side surfaces 122, and the flange section 13 is flush with the top surface after the assembly. The top surface of the flange section 13 is provided with gaps 220 caused by end surfaces of the blank sheet approaching one another and extending from the container section 12 toward an outside of the container main body 11. The resin film 3 covers the top surface of the flange section 13 and includes protruding sections 31 above the gaps 220 traversing the gaps 220.

As the condition for comparing the assembled paper container 1 according to the present invention with the assembled paper container 100 according to the prior invention, the cross-sectional shape of the protruding section 31 was formed in five types of a quadrangular shape, a trapezoidal shape, a triangular shape, an M shape, and a semicircular shape. The width of the protruding section 31 was 2 mm in the quadrangular shape, 2 mm and 3 mm in the trapezoidal shape, 2 mm in the triangular shape, 2 mm in the M shape, and 2 mm in the semicircular shape. Furthermore, the height of the protruding section 31 was set 1 mm and 2 mm in each of the shapes.

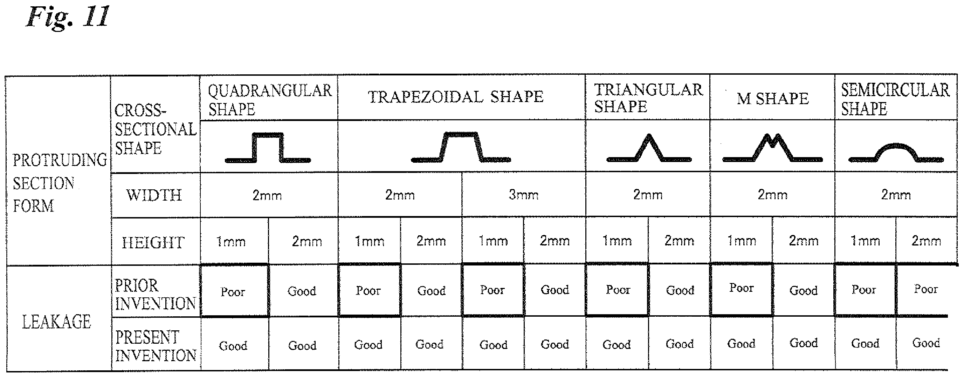

As a result, it was confirmed that, as illustrated in Fig. 11, for the assembled paper container 1 according to the present invention, there was no leakage under any conditions.

In contrast to this, for the assembled paper container 100 according to the prior invention, as illustrated in Fig. 11, there was leakage in the case where the cross-sectional shape of the protruding section 31 was the quadrangular shape, the width was 1 mm, and the height was 1 mm, and the case where the cross-sectional shape of the protruding section 31 was the semicircular shape, the width was 2 mm, and the height was 2 mm.

Accordingly, it has been seen that the assembled paper container 1 according to the present invention is advantageous compared with the assembled paper container 100 according to the prior invention.

Furthermore, the similar leakage confirmation inspection was additionally conducted with five samples of the assembled paper container 1 according to the present invention in which the cross-sectional shape of the protruding section 31 was the quadrangular shape, the width was 2 mm, the height was 2 mm, and the protruding section 31 was provided at a position displaced from the pressing region 32 of the top seal 4.

As a result, there was leakage in the three samples among the five samples.

Accordingly, it has been seen that also in the assembled paper container 1 according to the present invention, similarly to the assembled paper container 100 according to the prior invention, the position of providing the protruding section 31 is preferred to be fitted in the pressing region 32 of the top seal 4.

While the embodiments of the present invention have been described, the embodiments have been presented as examples, and are not intended to limit the scope of the invention. The novel embodiments described herein can be embodied in a variety of other configurations. Various omissions, substitutions, and changes can be made without departing from the gist of the invention. The embodiments and the modifications thereof are within the scope and the gist of the invention and within the scope of the inventions described in the claims and their equivalents.

### DESCRIPTION OF REFERENCE SIGNS

- 1:: Assembled paper container
- 11:: Container main body
- 12:: Container section
- 121:: Bottom surface
- 122:: Side surface
- 13:: Flange section
- 131:: Top surface
- 13a:: Fold-back piece
- 13b:: Fold-back piece
- 2:: Blank sheet
- 22:: Step
- 3:: Resin film
- 31:: Protruding section
- 31a:: First corner portion
- 31b:: Second corner portion
- 313:: Quadrangular top surface
- 32:: Pressing region
- 4:: Top seal
- 41:: Lower surface
- 5:: Cavity
- 600:: Manufacturing apparatus
- 610:: Lower mold
- 611:: Suction covering section
- 620:: Upper mold
- 621:: Top panel portion
- 630:: Flange pressing section
- 631:: Molding section
- 632:: Elastic member
- 640:: Vacuum pump
- 700:: Manufacturing system
- 710:: Supplying roller
- 720:: Winding roller
- 730:: Heating machine
- 740:: Trimming machine
- S 1:: Blank sheet cutting step
- S2:: Case assembling step
- S3:: Protruding section forming and resin film covering step
- S4:: Content housing step
- S5:: Top seal attaching step
- S6:: Trimming step
- T:: Thickness
- W:: Feed direction

## Claims

1. An assembled paper container comprising:
a container main body assembled from a blank sheet using paper as a main material, the container main body including a container section; and
a resin film covered over an inner surface of the container main body, wherein
the container main body includes:
a bottom surface;
a plurality of side surfaces standing upright from the bottom surface; and
a flange section continuous with upper end portions of the plurality of side surfaces and provided to extend toward an outside of the container section after the assembly,
the flange section has a top surface provided with a step extending outward from the container section side, and the step is generated by bonding fold-back pieces of the blank sheet together so as to be mutually overlapped after the assembly, and
the resin film has a protruding section traversing the step above the step in a part covered with the top surface of the flange section of the container main body.

2. The assembled paper container according to claim 1, wherein
the container main body is assembled from one blank sheet.

3. The assembled paper container according to claim 1 or 2, wherein
the protruding section of the resin film has a cross-sectional shape with at least one corner portion or arc portion traversing the step above the step.

4. The assembled paper container according to any one of claims 1 to 3, further comprising
a top seal attached to the resin film covered over the top surface of the flange section and covering the container section, wherein
the top seal traverses the step while squashing the protruding section, and is attached to the resin film above the top surface of the flange section.

5. The assembled paper container according to claim 4, wherein
the resin film is formed such that the protruding section is squashed by the top seal and the resin film including a peripheral portion of the protruding section is folded in three or more layers.

6. A method for manufacturing an assembled paper container that includes a container main body and a resin film, the container main body being assembled from a blank sheet using paper as a main material, the container main body including a container section, the resin film being covered over an inner surface of the container main body, the method comprising:
a case assembling step of assembling the container main body by standing a plurality of side surfaces from a bottom surface of the blank sheet to form the container section of the container main body, and folding back upper portions of the plurality of side surfaces and bonding fold-back pieces of the blank sheet together so as to be mutually overlapped to form a flange section provided to extend toward an outside of the container section, the flange section having a top surface provided with a step extending outward from the container section; and
a protruding section forming and resin film covering step of covering the inner surface of the container main body with the resin film by locating the resin film over the inner surface of the container main body assembled in the case assembling step, suctioning a surface of the resin film in a protruding section forming region traversing the step to provide the protruding section traversing the step to the resin film above the step, and extracting air between the container main body and the resin film from a gap between peripheries thereof.

7. The method for manufacturing an assembled paper container according to claim 6, wherein
in the protruding section forming and resin film covering step, a suction start timing of suctioning the surface of the resin film in the protruding section forming region traversing the step is set earlier than an extraction start timing of extracting the air between the container main body and the resin film.

8. The method for manufacturing an assembled paper container according to claim 6 or 7, further comprising
after the protruding section forming and resin film covering step, a top seal attaching step of attaching a top seal to the resin film covered over the top surface of the flange section so as to traverse the step while squashing the protruding section above the top surface of the flange section.

9. A manufacturing apparatus of an assembled paper container that includes a container main body and a resin film, the container main body being assembled from a blank sheet using paper as a main material, the container main body including a container section, the resin film being covered over an inner surface of the container main body, the manufacturing apparatus comprising:
a lower mold on which the container main body is placed;
a suction covering section provided in the lower mold and suctioning air between the resin film and the suction covering section to cover the inner surface of the container main body with the resin film;
an upper mold opposed to the lower mold and having the resin film interposed between the lower mold and the upper mold;
a flange pressing section housed in the upper mold and pressing the flange section of the container main body and the resin film on the flange section; and
a molding section provided to the flange pressing section, the molding section suctioning a protruding section forming region of the resin film on the flange section to mold the protruding section traversing a step at the resin film, the step being generated by bonding fold-back pieces of the blank sheet together so as to be mutually overlapped, and extending outward from the container section side.

10. The manufacturing apparatus of an assembled paper container according to claim 9, wherein
in the protruding section forming region of the resin film, a suction direction of the molding section is opposite to a suction direction of the suction covering section, and a suction force of the molding section is set to be larger than a suction force of the suction covering section.

11. The manufacturing apparatus of an assembled paper container according to claim 9 or 10, wherein
a suction start timing of the molding section is set to be earlier than a suction start timing of the suction covering section.
